# EUROPEAN PATENT APPLICATION

(11) **EP 3 147 917 A1**
(43) Date of publication of application: **29.03.2017**
(21) Application number: 16190391.9
(22) Date of filing: 23.09.2016
(51) Int. Cl.: H01F 38/14

(54) **CONTACTLESS ELECTRIC POWER SUPPLY DEVICE**

(30) Priority: 25.09.2015 JP 2015188089
(71) Applicant: AISIN SEIKI KABUSHIKI KAISHA, Kariya-shi, Aichi-ken, 448-8650 (JP)
(72) Inventor: IWASE, Eiichiro, KARIYA-SHI, AICHI-KEN, 448-8650 (JP)
(74) Representative: Intès, Didier Gérard André

(57) **Abstract**

A contactless power supply device includes a power supply core (40), a power receiving core (60), the power supply core (40) and the power receiving core (60) being disposed to face with each other closely, a first conductor (31) being wound annularly to form the power supply coil (30), a second conductor (51) being wound annularly to form the power receiving coil (50), the power supply core (40) including a surface formed with a first annular groove portion (41) for containing the power supply coil (30), the power receiving core (60) including a surface formed with a second annular groove portion (61) for containing the power receiving coil (50), the power supply core (40) being divided at at least a portion in a circumferential direction, and the power receiving core (60) being divided at at least a portion in the circumferential direction.

## Description

### TECHNICAL FIELD

This disclosure generally relates to a contactless electric power supply device.

### BACKGROUND DISCUSSION

A known contactless power supply device that sends and receives electric power without a contact of a power supply unit and a power receiving unit is used. The contactless power supply device uses electromagnetic induction effect generated between the power supply unit and the power receiving unit. However, when a magnetic field provided close to a metal rapidly changes, a vortex-induced current (an eddy current) is generated within the metal by the electromagnetic induction effect. The eddy current may cause a loss when the electric power is transmitted from the power supply unit to the power receiving unit and thereby causing a degradation of a transmission efficiency of the electric power. Thus, technologies reducing the eddy current are considered (for example, JPH6-163273A (hereinafter, referred to as Patent reference 1) and JP2013-243250A (hereinafter, referred to as Patent reference 2)).

An electromagnetic power supply device disclosed in Patent reference 1 includes a primary core and a secondary core that are made of ferrite, or made from stacked electromagnetic sheets. At least one of facing surfaces of the primary and secondary cores is applied with a magnetic body portion that is made from a soft magnetic film and that includes an electrical conductivity. The magnetic body portion includes slits for the reduction of the eddy current. The slits increase an equivalent length of an eddy current passage and reduce the loss caused by the eddy current.

A contactless power supply coil disclosed in Patent reference 2 includes a core that is made from a tape-shaped conductive member (a conductive member being formed such that a tape-shaped materials are wound) having a width dimension greater than a thickness dimension of the conductive member, the conductive member that is spirally wound while including an insulating layer. Accordingly, a component that is disposed orthogonal to a main surface of the tape-shaped conductive member (a surface of the tape-shaped conductive member that extends in a width direction and in a longitudinal direction) of a magnetic line of force within a contactless power supply coil may be decreased. Accordingly, the eddy current generated at the tape-shaped conductive member is inhibited, and a loss of an alternating current (for example, eddy current loss) at the contactless power supply coil may be efficiently inhibited.

According to the electromagnetic power supply device disclosed in Patent reference 1, the core is made from an insulating material of, for example, ferrite. Only the magnetic body portion that is applied on the facing surface may prevent the eddy current from generating. Accordingly, the electromagnetic power supply device disclosed in Patent reference 1 includes a two-layer structure of high-cost components. Because the attaching process attaching the magnetic body to the core is needed, a manufacturing cost may be increased. Furthermore, the magnetic body is not adaptable to an environment having a great change in temperature, or an intense oscillation because the magnetic body may be detached from the facing surface. Moreover, the whole core may be made from a low-cost iron conductive magnetic body for cost reduction, however, in this case, the eddy current may not be efficiently reduced.

According to the contactless power supply coil disclosed in Patent reference 2, because the contactless power supply coil is manufactured in the two-layer structure including the tape-shaped conductive member and the insulating layer, the cost of the contact power supply coil may be increased. A winding process of the two-layer-structured materials may be a factor of the cost increase. Furthermore, the facing surfaces of the power supply core and the power receiving core are needed to be in parallel with each other. However, because the two-layer-structured materials are wound in a spiral manner, the facing surfaces of the power supply core and the power receiving core may not be easily provided in parallel with each other. In a case where the facing surfaces of the power supply core and of the power receiving core are not in parallel with each other, the magnetic resistance of an air gap portion provided between the power supply core and the power receiving core may be increased, and the contactless power supply coil may not have an expected characteristics.

A need thus exists for a contactless electric power supply device that is low cost and that transmits electric power effectively.

### SUMMARY

According to an aspect of this disclosure, a contactless power supply device includes a power supply core formed in an annular shape, a power receiving core formed in the annular shape, the power supply core and the power receiving core being disposed to face with each other closely, the power supply core including a surface formed with a first annular groove portion for containing the power supply coil, the power receiving core including a surface formed with a second annular groove portion for containing the power receiving coil, the power supply core being divided at at least a portion in a circumferential direction of the power supply core, and the power receiving core being divided at at least a portion in the circumferential direction of the power receiving core.

According to the aforementioned construction, the eddy current flows along the outer circumferential surface of the power supply core and the eddy current flows along the outer circumferential surface of the power receiving core. The eddy current flows along the inner circumferential surface of the power supply core by making a U-turn at the divided portion. The eddy current flows along the inner circumferential surface of the power receiving core by making the U-turn at the divided portion. Accordingly, the electric current passage through which the eddy current passes may be lengthened. Consequently, the power resistance may be enhanced and the eddy current may be reduced.

According to another aspect of this disclosure, the power supply core is formed with plural first annular core members each having a U-shaped cross section that is orthogonal to the circumferential direction of the power supply core, and the power receiving core is formed with plural second annular core members each having the U-shaped cross section that is orthogonal to the circumferential direction of the power receiving core.

In this case, the stacked surfaces are electrically insulated. Accordingly, the amount of magnetic flux passing through one of the cores is reduced in proportion to the plate thickness. Accordingly, electromotive force (V=d Φ /dt) generating the eddy current is reduced, and the eddy current is reduced. The same amount of the electric current flowing on a surface layer of the single core flows on the whole stacked plates. Thus, the whole stacked plates may reduce the eddy current.

According to still further aspect of this disclosure, the first core member and the second core member are made from an electromagnetic steel plate.

According to the aforementioned construction, the power supply core and the power receiving core may be provided at low cost. Accordingly, the low-cost contactless power supply device may be provided.

According to further aspect of this disclosure, the plural first annular core members have different inner diameters from one another, the plural second annular core members have different inner diameters from one another, the power supply core is formed such that the plural first core members are stacked with one another successively from an opening of the first groove portion, and the power receiving core is formed such that the plural second core members are stacked with one another successively from an opening of the second groove portion.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a structure of a contactless power supply device according to an embodiment disclosed here;
Fig. 2 is a cross-sectional view of a power supply unit taken along line II-II in Fig. 1;
Fig. 3 is a perspective view of the power supply unit;
Fig. 4 is a view schematically illustrating a passage of an eddy current at a power supply core; and
Fig. 5 is a comparison result of an electric transmission efficiency of various types of cores.

### DETAILED DESCRIPTION

A contactless power supply device according to an embodiment can efficiently supply an electric power from a power supply unit to a power receiving unit. Hereinafter, a contactless power supply device 1 of the embodiment will be explained.

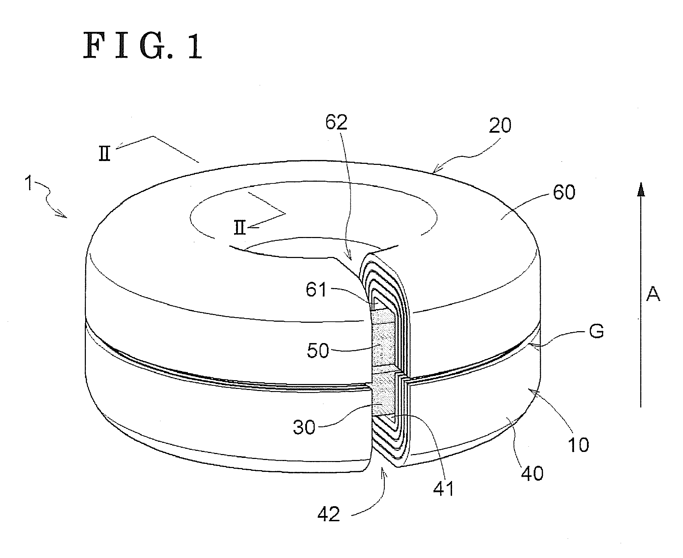

As shown in Fig. 1, the contactless power supply device 1 includes a power supply unit 10 and a power receiving unit 20. The power supply unit 10 includes a power supply coil 30 and a power supply core 40. The power receiving unit 20 includes a power receiving coil 50 and a power receiving core 60.

As shown in Fig. 1, the power supply core 40 and the power receiving core 60 are annular soft magnetic bodies, respectively. A shape of the soft magnetic body is not limited to an annular shape. According to the embodiment, the soft magnetic body is formed in a circular annular shape. The power supply core 40 and the power receiving core 60 closely face with each other. More precisely, a predetermined air gap G is formed between them. Such gap is small, for example, the height of the air gap, as measured in the axial direction of the cores 40 and 60, is less than 1/10^{th} of the respective heights of the cores.

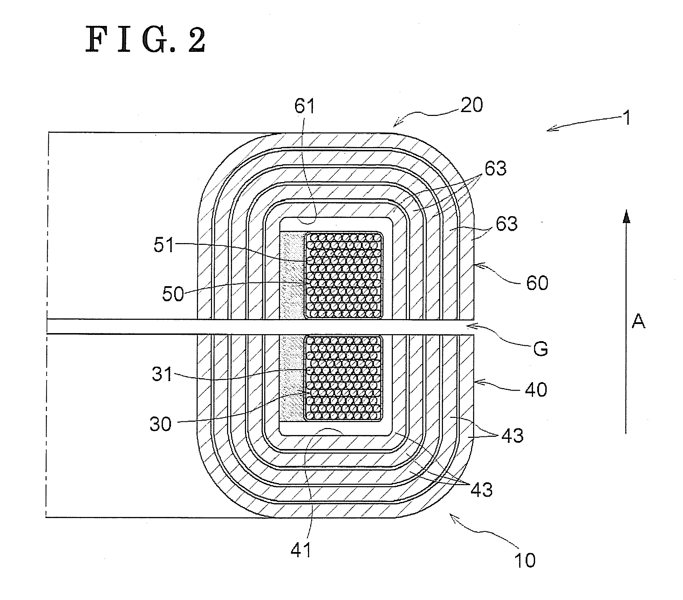

As shown in Fig. 2, respective facing surfaces of the power supply core 40 and of the power receiving core 60 are provided with first and second annular groove portions 41, 61. Accordingly, the power supply core 40 and the power receiving core 60 are disposed such that the first and second respective groove portions 41, 61 face with each other.

First and second conductors 31, 51 are wound annularly to form the power supply coil 30 and the power receiving coil 50, respectively. Surroundings of the first and second conductors 31, 51 are covered with an insulating material. According to the embodiment, each of the power supply coil 30 and the power receiving coil 50 is formed such that an annular bobbin is wound with the conductor by a predetermined number of times. Here, the bobbin may be contained in each of the first and second annular groove portions 41, 61. In a case where the bobbin is not used, the power supply coil 30 and the power receiving coil 50 may have a size that can be contained in the first and second annular groove portions 41, 61, respectively.

The power supply coil 30 is contained in the first annular groove portion 41. The power receiving coil 50 is contained in the second annular groove portion 61. An alternating current power source is connected to the power supply coil 30, the alternating current power supply source that outputs an alternating current having a predetermined frequency. The number of turns of the power supply coil 30 is set in accordance with the frequency. An electric power output portion that outputs an electric power generated in the power receiving coil 50 is connected to the power receiving coil 50.

Each of the power supply core 40 and the power receiving core 60 is divided at at least one position in a circumferential direction. According to the embodiment, each of the power supply core 40 and the power receiving core 60 is divided at one position. Accordingly, the power supply core 40 and the power receiving core 60 include first and second voids 42, 62, respectively. Thus, each of the power supply core 40 and the power receiving core 60 is formed in a C-shape when viewing in an axial direction (a direction A in Fig. 1).

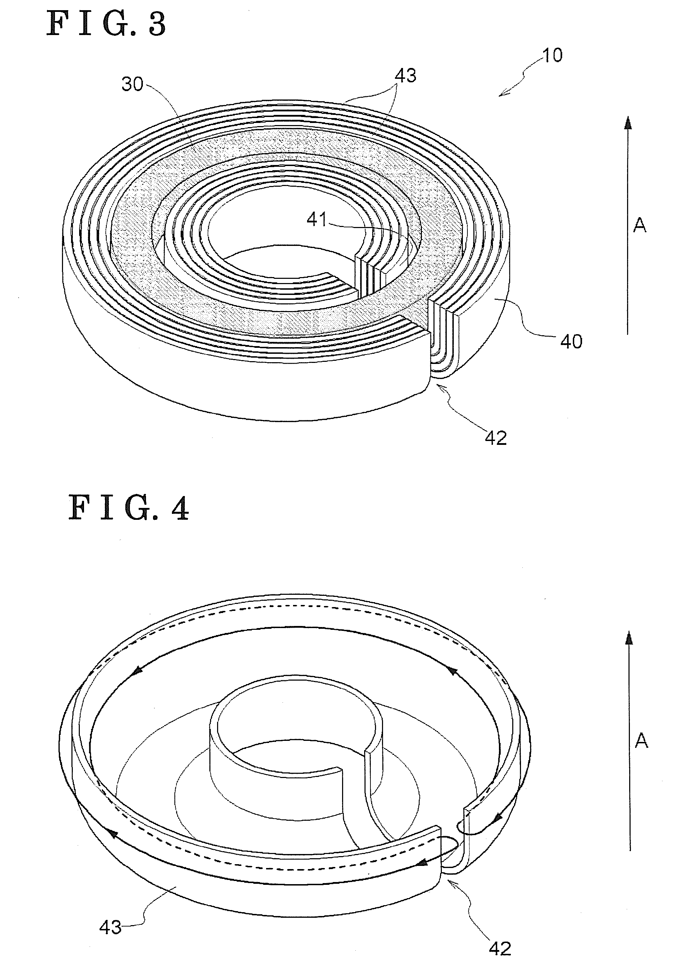

Because the power receiving core 60 is similar to the power supply core 40, the explanation of the power receiving core 60 will be omitted. As shown in Fig. 3, according to the embodiment, the power supply core 40 is formed with the first annular core member 43 having a U-shaped cross section that is orthogonal to the circumferential direction. The power receiving core 60 is formed with the second annular core member 63 having the U-shaped cross section that is orthogonal to the circumferential direction. The cross section orthogonal to the circumferential direction serves as a cut surface of each of the power supply core 40 and the power receiving core 60 in a case where each of the power supply core 40 and the power receiving core 60 is cut along the radial direction. The cut surface is formed in a U-shape and the U-shaped groove corresponds to each of the first and second groove portions 41, 61. The first plural core members 43 are stacked with one another along the direction A in Figs. 2 and 3. The second plural core members 63 are stacked with one another along the direction A in Figs. 2 and 3. The annular core member may be favorably formed by the pressing process of a flat plate of an electromagnetic steel plate (a silicon steel plate). The plural first and second annular core members 43, 63 having different inner diameters of the first and second groove portions 41, 61, respectively, are made by the pressing process. Each of the first annular core members 43 includes a diameter that is reduced successively from an opening of the first groove portion 41. Each of the second annular core members 63 includes a diameter that is reduced successively from an opening of the second groove portion 61. The plural first annular core members 43 are stacked with one another. The plural second annular core members 63 are stacked with one another.

When the alternating current power having a predetermined frequency is applied to the power supply coil 30, the magnetic field is generated at the surroundings of the power supply coil 30. The magnetic flux of the magnetic field is magnetically collected by the power supply core 40. The magnetic flux magnetically collected by the power supply core 40 rounds a magnetic circuit formed by the power supply core 40, the air gap G, and the power receiving core 60. Here, an electromotive force generated in response to the change of the time of flux linkage is generated, and the electric current is generated at the power receiving coil 50. As such, the contactless power supply device 1 is able to supply the electric power from the power supply unit 10 to the power receiving unit 20 in a contactless manner.

Here, because a known contactless power supply device includes a core that is made of ferrite having high resistance, the eddy current generated at ferrite is reduced, and the loss when supplying the electric power is reduced. However, when each of the power supply core 40 and the power receiving core 60 of the contactless power supply device 1 of the embodiment is made of a steel magnetic body, because the electrical resistance is decreased, the eddy current is increased. The eddy current flows in a predetermined direction along the respective outer circumferential surfaces of the power supply core 40 and of the power receiving core 60. The eddy current flows in an opposite direction from the predetermined direction along respective inner circumferential surfaces of the power supply core 40 and of the power receiving core 60.

According to the contactless power supply device 1, the power supply core 40 includes a first void 42 at a portion in the circumferential direction, and the power receiving core 60 includes a second void 62 at a portion in the circumferential direction. The voids 42 and 62, respectively, form interruptions or divisions in the power supply core 40 and the power receiving core 60, respectively. Thus, these cores 40 and 60 both have a not-closed annular shape, similar to a C-shape. Accordingly, as shown in Fig. 4, the eddy current flows along the outer circumferential surface of the power supply core 40 and the eddy current flows along the outer circumferential surface of the power receiving core 60. The eddy current flows along the inner circumferential surface of the power supply core 40 by making a U-turn at the first void 42. The eddy current flows along the inner circumferential surface of the power receiving core 60 by making the U-turn at the second void 62. Accordingly, in a case where the outer diameter and the inner diameter of the core of the embodiment is equal to the outer diameter and the inner diameter of the core of a known contactless power supply device, the electric current passage of the eddy current may be longer than the core of the known contactless power supply device. Thus, the electric resistance may be enhanced and the eddy current may be reduced.

As described above, the power supply core 40 includes the first core members 43 that are stacked with one another, and the power receiving core 60 includes the second core members 63 that are stacked with one another. Accordingly, because the cross sectional area of the passage through which the magnetic flux passes is reduced at the power supply core 40, the amount of the magnetic flux is reduced, and because the cross sectional area of the passage through which the magnetic flux passes is reduced at the power receiving core 60, the amount of the magnetic flux is reduced. Accordingly, a back electromotive force per sheet is reduced. Thus, the eddy current may be reduced.

The frequency of the alternating current power applied to the power supply coil 30 corresponds to 1.8 kilohertz, or kHz.

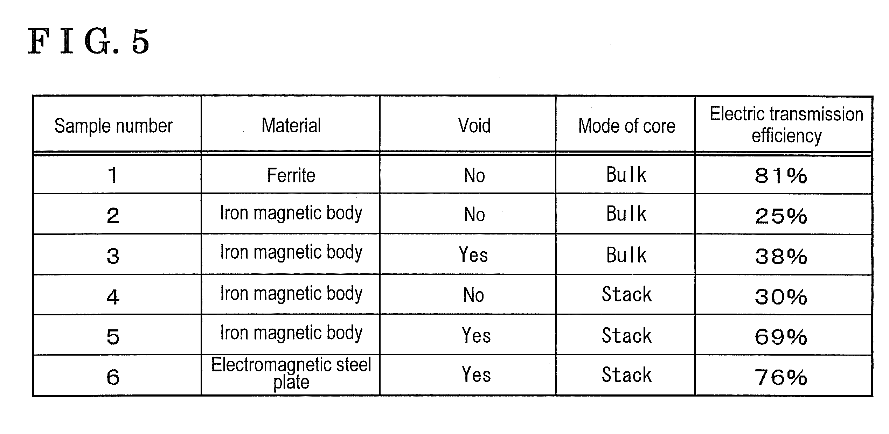

As shown in a sample number 1 in Fig. 5, in a case where a bulk core (integrated core without being stacked) that is made of a known high-resistance ferrite and that does not include a void is used, the power transmission rate (output power divided by input power) corresponds to 81 percent, or 81 %. On the other hand, in a case where the core (a sample number 2) that is made of an iron bulk magnetic body and that does not include the void is used, the power transmission efficiency is reduced to 25 %.

In a case where the cores made of the iron bulk magnetic body are provided with the first and second voids 42, 62, respectively, at predetermined positions, the power transmission efficiency is enhanced up to 38 % as shown in a sample number 3. Meanwhile, in a case where the cores that have the stacked iron magnetic bodies and that do not include the voids, respectively, the power transmission efficiency is enhanced up to 30 % as shown in a sample number 4. In a case where the cores that have the stacked iron magnetic bodies include the first and second voids 42, 62, respectively at predetermined positions, the power transmission efficiency is enhanced up to 69 % as shown in a sample number 5. As such, the power transmission efficiency may be enhanced by the first and second voids 42, 62 provided at the cores, and by the stack of the magnetic bodies of the cores.

Moreover, when the cores are formed by the stack of electromagnetic steel plates that are available at the cost lower than ferrite and that include high power resistance among iron magnetic bodies, and when the first and second voids 42, 62 are formed at the predetermined positions, respectively, the power transmission efficiency is enhanced up to 76 % as shown in a sample number 6. This is similar to the known core shown in the sample number 1. As such, the contactless power supply device 1 may enhance the power transmission efficiency at low cost.

According to the aforementioned embodiment, the power supply core 40 is formed such that first annular core members 43 having U-shaped cross sections that are orthogonal to the circumferential direction are stacked with one another. The power receiving core 60 is formed such that second annular core members 63 having U-shaped cross sections that are orthogonal to the circumferential direction are stacked with one another. Alternatively, each of the power supply core 40 and the power receiving core 60 may be made from a bulk material.

According to the aforementioned embodiment, each of the first and second core members 43, 63 is made from an electromagnetic steel plate. Alternatively, other soft magnetic materials may be used.

According to the embodiment, the disclosure may be used to a contactless power supply device that supplies power from a power unit to a power receiving unit without making the power supply unit and the power receiving unit come in contact with each other.

## Claims

1. A contactless power supply device, comprising:
a power supply core (40) formed in an annular shape;
a power receiving core (60) formed in the annular shape;
the power supply core (40) and the power receiving core (60) being disposed to face with each other closely;
the power supply core (40) including a surface formed with a first annular groove portion (41) for containing a power supply coil (30);
the power receiving core (60) including a surface formed with a second annular groove portion (61) for containing a power receiving coil (50);
the power supply core (40) being divided at at least a portion in a circumferential direction of the power supply core (40); and
the power receiving core (60) being divided at at least a portion in the circumferential direction of the power receiving core (60).

2. The contactless power supply device according to claim 1, wherein
the power supply core (40) is formed with plural first annular core members (43) each having a U-shaped cross section that is orthogonal to the circumferential direction of the power supply core (40); and
the power receiving core (60) is formed with plural second annular core members (63) each having the U-shaped cross section that is orthogonal to the circumferential direction of the power receiving core (60).

3. The contactless power supply device according to claim 2, wherein
the first core member (43) and
the second core member (63) are made from an electromagnetic steel plate.

4. The contactless power supply device according to claim 2 or 3, wherein
the plural first annular core members (43) have different inner diameters from one another;
the plural second annular core members (63) have different inner diameters from one another;
the power supply core (40) is formed such that the plural first core members (43) are stacked with one another successively from an opening of the first groove portion (41); and
the power receiving core (60) is formed such that the plural second core members (63) are stacked with one another successively from an opening of the second groove portion (61).
